# EUROPEAN PATENT APPLICATION

(11) **EP 2 611 095 A1**
(43) Date of publication of application: **03.07.2013**
(21) Application number: 11306791.2
(22) Date of filing: 28.12.2011
(51) Int. Cl.: H04L 29/06, G06F 21/00

(54) **Method for determining anonymously a given user's data among a plurality of user's data in a network**

(71) Applicant: Gemalto SA, 92197 Meudon (FR)
(72) Inventor: Ennesser, François, 92190 Meudon (FR); Ravon, Jean-Michel, 92190 Meudon (FR)

(57) **Abstract**

The invention relates to a method for determining anonymously a given user's data among a plurality of user's data in a network, said network comprising a server, a gateway, said user's data adapted to be exchanged between the gateway (20) and the server (10), said gateway (20) comprising a secure element (22), characterized in that it comprises sending public keys of the gateway associated to each user's data to the server and sending to the gateway public keys of the server associated to each user's data.

## Description

### FIELD OF THE INVENTION

The present invention relates generally an a Machine-to-Machine communication network and more specifically to a Machine-to-Machine communication network in which sensitive private data of a user need to be stored and access without compromising the identity of the user and his behaviour.

### BACKGROUND OF THE INVENTION

In a Machine-to-Machine communication network communication network, user private data are stored in clear. Some private data that are not sensitive by themselves can become a privacy threat to their owner if they can be linked to his/her identity by a potential hacker. Data for example related to electric power consumption of an household over short time period can disclose habits and provide knowledge that can be used for example by burglars to schedule the appropriate time for a robbery.

One problem is to allow only authorized users to get these data without, during exchange and processing, exposing the identity of the end user data owner.

One common solution to such problem is to store encrypted data only instead of data in clear.

Nevertheless, this is more computing intensive.

It is then an object of the invention to provide a method to ensure the anonymity of users' data while storing and emitting them in clear.

Thereto, the present invention provides a method for determining anonymously a given user's data among a plurality of user's data in a network, said network comprising a server, a gateway, said user's data adapted to be exchanged between the gateway and the server, said gateway comprising a secure element, characterized in that it comprises sending public keys of the gateway associated to each user's data to the server and sending to the gateway public keys of the server associated to each user's data.

According to other aspects of the invention, the method may comprise a step of sending data to the gateway, said data comprising:
o the public key of the server associated to the given user,
o a session identifier,
o an encrypted identity of said given user;

According to other aspects of the invention, the encrypted identity of said given user may be encrypted with the public key of the server associated to said given user.

According to other aspects of the invention, the method may comprise a step of sending data to the gateway, said data comprising:
o the public key of the server associated to the given user,
o an encrypted session identifier.

According to other aspects of the invention, the session identifier may be encrypted with the public key of the server associated to said given user.

According to other aspects of the invention, the method may comprise a step wherein the gateway transmits the received data to the secure element.

According to other aspects of the invention, the method may comprise a step wherein the secure element determines the public key of the gateway associated to said public key of the server associated to the given user.

According to other aspects of the invention, the secure element may decrypt the encrypted identity of the given user and may determine an access data associated to the identity of the given user.

According to other aspects of the invention, the secure element may decrypt the encrypted session identifier, may determine the corresponding identity of the given user and may determine an access data associated to the identity of the given user.

According to other aspects of the invention, the secure element may send said access data to the gateway.

According to other aspects of the invention, the method may comprise sending back in clear to the server the given user's data associated to said access data.

The invention also proposes a use of the method in a smart grid network. The smart grid network may comprise a server, a gateway, a plurality of smart meters associated to a plurality of users and adapted to send user's data to the gateway wherein the server and the gateway may be adapted to exchange data. The gateway may comprise a structure data comprising user's data and a secure element. The secure element may comprise a plurality of user's identifiers associated to said plurality of users, means for encrypting such user's identifiers, an accessor comprising access data allowing to access the user's data of the structure data.

The invention can advantageously be used to prevent energy consumption data belonging to a given user to be linked with the individual's identity, in a smart grid network

With this invention, the sensitive data of individuals are never present in association with the individual's identity, therefore an attacker able to access the data cannot link them to their owner, which makes them useless.

The invention advantageously provides a faster method which preserves the anonymity of a user's private data.

The various aspects, features and advantages of the invention will become more fully apparent to those having ordinary skill in the art upon careful consideration of the following Detailed Description, given by way of example thereof, with the accompanying drawings described below:
**FIG.1** schematically shows a smart grid network according to the invention.
FIG.2 schematically shows a smart grid network according to a step of the invention.

### DETAILED DESCRIPTION

The present invention may be understood according to the detailed description provided herein.

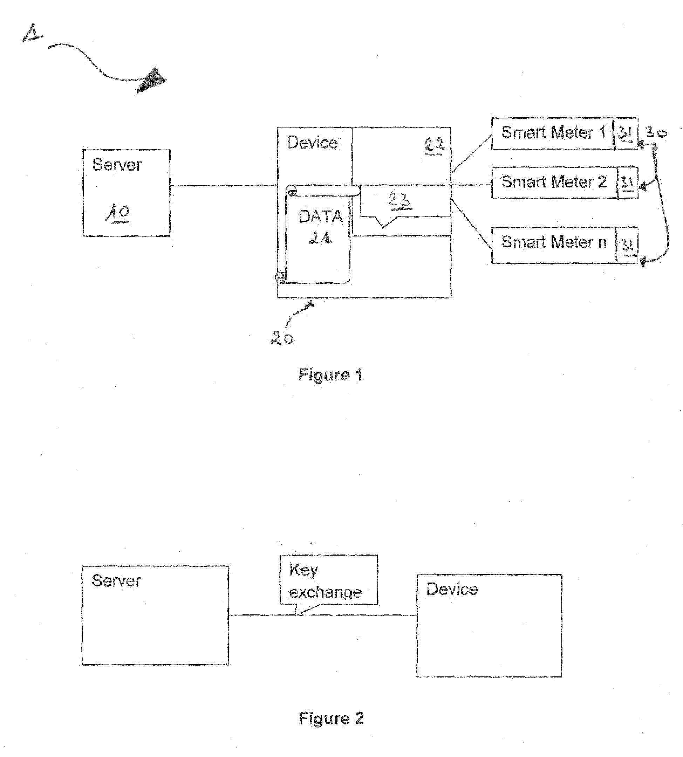

Shown in figure 1 is a Machine-to-Machine communication network 1 such as a smart grid network comprising a server 10, a gateway 20, smart meters 30, each of these elements providing storage and computing capabilities.

The server 10 is a server in smart grid's network that needs users' data.

The gateway 20 or concentrator stores several users' data 21. It also comprises a secure element 22 which comprises user's identifiers, means for encrypting such user's identifiers such as keys and accessors 23 allowing to access the user's data 21 in the device. An accessor is an index or a pointer in a table.

The gateway 20 is in a safe premise, e.g. its link with the secure element is secured.

Each smart meters 30 comprises a corresponding secure elements 31 that provides protection to the associated user identifier and associated key pair.

A method of the invention provides a solution for establishing a link with the identity to which a smart meter's data belong to.

The gateway first registers the given individual with his public key to the network.

The method comprises a step of sending data from the smart meter or home gateways 30 to the gateway 20 which aggregates the data of the multiple meters 30.

As shown in figure 2, the method comprises sending public keys of the gateway associated to each user's data to the server and sending to the gateway public keys of the server associated to each user's data. For doing so, the gateway 20 establishes a connection with the server 10 and sends the public keys of each user to the server 10. The server replies with its public keys associated to each user. This is done once for all.The method comprises the following steps:
- Step S1: upon request from the server 10 or an authorized entity to retrieve data of a given user, for example data of a smart meter associated to a given user, it comprises of sending data by the server 10 to the gateway 20, said data comprising the public key of the server associated to the given user, a session identifier S_id, an encrypted identity of said given user;

Several messages of this kind may be sent simultaneously

The encrypted identity of said given user is encrypted with the public key of the server associated to said given user.
- Step S2: the gateway 20 transmits the received data to its embedded secure element 22.
- Step S3: the secure element 22 determines the public key of the gateway 20 associated to said public key of the server associated to the given user. For doing so, the secure element 22 decrypts the encrypted identity of the given user and determines an access data associated to the identity of the given user. It determines an access data in the accessor 23 associated to the user's identity such as a pointer in the data structure 24, or an index in a table. This access data is sent back in clear to the gateway 20 both with the session identifier.
- Step S4: the secure element 22 sends said access data to the gateway (20): the gateway 20 retrieves the requested data of the corresponding smart meter 30 given from the data structure 24.

The method then comprises sending back in clear to the server (10) the given user's data associated to said access data, e.g. and the gateway 20 sends the requested data back in clear with the given session identifier to the network.

In another embodiment, only an encrypted Session with the public key associated to the given user is sent by the server 10. Indeed, this public key identifies the user so that the secure element in the gateway is able to make the relation between its key and the user. This way, the user id is never present on the network.

For doing so, upon request from the server 10 to retrieve data of the given user, the method comprises a step S1ʹ of sending data to the gateway 20, said data comprising the public key of the server associated to the given user, with an encrypted session identifier S_id.
the session identifier S_id is encrypted with the public key of the server associated to said given user.

In this embodiment, the secure element 22 decrypts the encrypted session identifier S_id, determines the corresponding identity of the given user and determines the access data associated to the identity of the given user.

In case the link between the meter and the concentrating gateway is exposed to hacker's attacks, the data can be sent in scrambled form to the gateway 30, assuming that the associated scrambling pattern is sent in an encrypted form by the device to the gateway.

It will be well understood that this access to data in the accessor is updated when necessary, e.g. when the index or the pointer changes due to modification in the data structure.

Thanks to the invention data are stored in clear on the server 10, the gateway 20 within the Machine-to-Machine communication network 1 which does not contain information on the data owners identities.

It will be well understood that a smart meter can be replaced by any other entity that generates users related data.

## Claims

**1.** Method for determining anonymously a given user's data among a plurality of user's data in a network, said network comprising a server, a gateway, said user's data adapted to be exchanged between the gateway (20) and the server (10), said gateway (20) comprising a secure element (22), **characterized in that** it comprises sending public keys of the gateway associated to each user's data to the server and sending to the gateway public keys of the server associated to each user's data.

**2.** Method according to claim 1, **characterized in that** upon request from the server (10) to retrieve data of a given user, it comprises a step (S1) of sending data to the gateway (20), said data comprising:
a. the public key of the server associated to the given user,
b. a session identifier (S_id)
c. an encrypted identity of said given user;

**2.** Method according to claim 2, **characterized in that** it the encrypted identity of said given user is encrypted with the public key of the server associated to said given user.

**3.** Method according to claim 1, **characterized in that** upon request from the server (10) to retrieve data of a given user, it comprises a step (S1') of sending data to the gateway (20), said data comprising:
a. the public key of the server associated to the given user,
b. an encrypted session identifier (S_id)

**4.** Method according to claim 3, **characterized in that** the session identifier (S_id) is encrypted with the public key of the server associated to said given user.

**5.** Method according to any of the previous claims, **characterized in that** it comprises a step (S2) wherein the gateway (20) transmits the received data to the secure element (22).

**6.** Method according to claim 5, **characterized in that** it comprises a step (S3) wherein the secure element (22) determines the public key of the gateway (20) associated to said public key of the server associated to the given user;

**7.** Method according to claim 6, **characterized in that** the secure element (22) decrypts the encrypted identity of the given user and determines an access data associated to the identity of the given user.

**8.** Method according to claim 6, **characterized in that** the secure element (22) decrypts the encrypted session identifier (S_id), determines the corresponding identity of the given user and determines an access data associated to the identity of the given user.

**9.** Method according to claim 7 or 8, **characterized in that** the secure element (22) sends said access data to the gateway (20).

**10.** Method according to claim 9, **characterized in that** it comprises sending back in clear to the server (10) the given user's data associated to said access data.

**11.** Use of the method according to claim 1 to 10 for determining anonymously a user's data in the smart grid network (1), said smart grid network comprising a server (10), a gateway (20), a plurality of smart meters(30) associated to a plurality of users and adapted to send user's data to the gateway,
a. the server and the gateway adapted to exchange data,
b. the gateway comprising
i. a structure data (24) comprising user's data
ii. a secure element (22) which comprises
1. a plurality of user's identifiers associated to said plurality of users,
2. means for encrypting such user's identifiers, an accessor (23) comprising access data allowing to access the user's data of the structure data.
